(19) **Europäisches Patentamt**

**European Patent Office**

**Office européen des brevets**

(11) **EP 1 070 539 A1**

(12) **DEMANDE DE BREVET EUROPEEN**

(43) Date de publication:
**24.01.2001 Bulletin 2001/04**

(51) Int Cl.[7]: **B01J 20/18**, B01D 53/04,
B01D 53/047

(21) Numéro de dépôt: **00401630.9**

(22) Date de dépôt: **08.06.2000**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **22.07.1999 FR 9909516**

(71) Demandeur: **L'AIR LIQUIDE, SOCIETE ANONYME
POUR
L'ETUDE ET L'EXPLOITATION DES PROCEDES
GEORGES CLAUDE
75321 Paris Cédex 07 (FR)**

(72) Inventeur: **Lledos, Bernard
78280 Guyancourt (FR)**

(74) Mandataire: **Le Moenner, Gabriel et al
L'Air Liquide S.A.,
DSPI,
Service Brevets et Marques,
75 Quai d'Orsay
75321 Paris Cedex 07 (FR)**

(54) **Adsorbant à sélectivité améliorée pour la séparation des gaz**

(57) L'invention concerne un adsorbant poreux comportant des pores ayant un diamètre de pore (Dm) compris entre 1 nm et 14 nm et ayant, en outre, une capacité d'adsorption en oxygène, mesurée à +20°C et 1 bar, d'au plus 10 Ncc/g, ainsi que l'utilisation de cet adsorbant pour adsorber au moins un composé gazeux contenu dans un mélange gazeux contenant plusieurs composés gazeux de polarité différente. De préférence, le mélange gazeux à séparer ou à purifier est choisi parmi les mélanges contenant de l'oxygène et de l'azote, en particulier l'air, les mélanges contenant du monoxyde de carbone et de l'hydrogène, et les hydrocarbures, notamment les oléfines. Avantageusement, le procédé est de type PSA ou VSA.

FIG.2

EP 1 070 539 A1

**Description**

L'invention concerne un procédé de séparation ou de purification de gaz par adsorption, notamment de procédés PSA, TSA ou VSA, utilisant un adsorbant à sélectivité améliorée.

Les procédés cycliques d'adsorption du type PSA (pour Pressure Swing Adsorption = Adsorption avec variation de pression), TSA (Temperature Swing Adsorption = Adsorption avec variation de température) et VSA (Vacuum Swing Adsorption = Adsorption avec variation de vide) sont actuellement largement utilisés pour la production des gaz. Ainsi, on peut citer, par exemple, la séparation des gaz de l'air par adsorption préférentielle de l'azote afin de produire l'oxygène par procédé VSA.

Pour ce faire, les zéolites, notamment de type LTA ou FAU, essentiellement X ou LSX, sont les adsorbants le plus communément utilisés dans les procédés d'adsorption.

Classiquement, les adsorbants préférés pour la séparation des gaz, et plus particulièrement de l'air, sont des zéolites fortement échangées, en général à plus de 80%, avec des métaux alcalins ou alcalino-terreux, tels que le lithium, le calcium, le strontium, le baryum ou des métaux de transition, tels que l'aluminium, le cuivre ou le zinc, ou des mélanges de ces cations.

A ce titre on peut citer les documents US-A-5,268,023, US-A-5,174,979, US-A-4,859,217, US-A-5,152,813, US-A-4,481,018, US-A-5,419,891, EP-A-589406 et EP-A-589391.

De telles zéolites sont habituellement synthétisées sous la forme de poudre de cristaux de dimensions microniques. Toutefois, cette forme pulvérulente ne peut être directement utilisée dans des procédés cycliques de séparation des gaz ou dans des procédés catalytiques, car la poudre serait entraînée par les flux gazeux sous pression.

De ce fait, une étape de mise en forme, par exemple par extrusion ou formation de billes est requise.

On choisit, pour ces granulats, la taille et la forme la plus adaptée au procédé dans lesquels ils doivent être mis en oeuvre.

Cette mise en forme confère à l'adsorbant notamment ses propriétés mécaniques, telle la résistance à l'écrasement, et cinétiques.

A ce jour, aucune loi de comportement générale n'a pu être dégagée, sachant qu'il est très difficile de relier les paramètres du procédé aux paramètres de l'adsorbant. Il est tout de même connu que les propriétés de l'adsorbant, et notamment celles liées à sa mise en forme, jouent un rôle primordial dans l'efficacité globale des procédés.

En outre, il est bien connu que la séparation des gaz en vue de leur production peut se faire, quand leur polarité diffère, par adsorption sélective des molécules les plus polaires par rapport au moins polaires sur des adsorbants poreux.

On peut, par exemple, citer la séparation des gaz de l'air en vue de la production d'oxygène par adsorption sélective de l'azote sur tamis moléculaires zéolitiques.

Ces adsorbants sont généralement utilisés dans des procédés cycliques de type PSA mettant en jeu un ou plusieurs lits d'adsorbants et différentes étapes parmi lesquelles la production de gaz par adsorption de la molécule polaire effectuée à une pression haute et la régénération de l'adsorbant effectuée à une pression basse.

Dans le cas de la séparation des gaz de l'air, la pression basse est généralement inférieure à la pression atmosphérique (vide) et la pression haute est légèrement supérieure à la pression atmosphérique. Ces procédés sont alors dits VSA.

Ces adsorbants utilisés dans ces procédés, notamment PSA ou VSA, sont caractérisés par différentes grandeurs thermodynamiques en relation avec le procédé dans lequel ils sont utilisés, à savoir notamment :

- la capacité d'adsorption $Q_{N2}$ pour la molécule polaire, par exemple l'azote définie à une pression et une température donnée, par exemple 20°C et 1 bar ;
- la capacité d'adsorption $Q_{O2}$ pour la molécule moins polaire, par exemple l'oxygène définie à une pression et une température donnée, par exemple 20°C et 1 bar ;
- la sélectivité d'adsorption

$$\left\lceil \frac{Q_{N2}}{Q_{O2}} \right\rfloor$$

définie comme le rapport des capacités d'adsorption pour les molécules pures à une pression et une température donnée, par exemple 20°C et 1 bar.

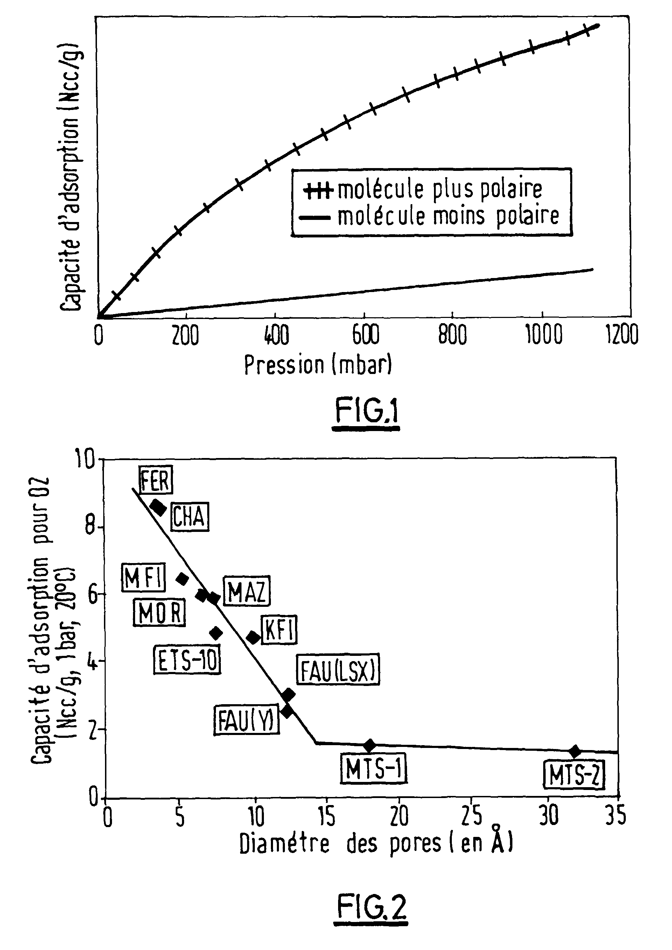

Ces paramètres sont illustrés sur la figure 1 ci-annexée.

Le paramètre "sélectivité" est primordial pour la production des gaz car son augmentation va permettre non seulement d'augmenter le rendement de l'opération de séparation du mélange gazeux, mais aussi d'abaisser la consommation d'énergie associée à la production du gaz et d'augmenter la productivité du procédé.

Il est donc nécessaire, dans ces procédés de séparation des gaz par adsorption de molécules plus polaire, en vue de la production de molécule moins polaire, d'utiliser dans des procédés cycliques d'adsorption des matériaux adsorbants présentant la sélectivité d'adsorption telle que définie ci-dessus la plus élevée.

Un moyen d'obtenir une sélectivité élevée consiste à utiliser un adsorbant dont la capacité d'adsorption pour les molécules moins polaires est la plus faible possible.

Toutefois, cela étant dit, le problème qui se pose est alors de diminuer au maximum la capacité d'adsorption d'un adsorbant pour les molécules les moins polaires tel l'oxygène, de manière à augmenter la sélectivité dudit adsorbant pour les molécules plus polaires, tel l'azote, et ainsi améliorer les procédés de séparation ou purification de gaz utilisant de tels adsorbants à sélectivité améliorée.

La solution apportée par l'invention concerne alors un adsorbant poreux comportant des pores ayant un diamètre de pore (Dm) compris entre 1 nm et 14 nm, et ayant une capacité d'adsorption en oxygène, mesurée à +20°C et 1 bar, d'au plus 10 Ncc/g.

En effet, l'inventeur de la présente invention a montré que, de façon tout à fait surprenante, il existe une corrélation entre la capacité d'adsorption pour l'oxygène, molécule moins polaire, et le rayon moyen des pores de l'adsorbant utilisé dans le procédé de séparation, et cela jusqu'à un rayon des pores d'environ 1,4 nanomètre.

Au-delà de cette limite, l'augmentation du diamètre des pores du matériau adsorbant n'a plus qu'un effet minime sur la capacité d'adsorption des molécules moins polaires telles que l'oxygène.

De là, l'utilisation de matériaux adsorbants poreux dont le rayon moyen des pores présente des dimensions supérieures ou égales à 1.4 nm permet donc de limiter l'adsorption de molécules moins polaires, par exemple, l'oxygène, et rend de ce fait les procédés de production de ces molécules plus économiques et acceptables au plan industriel.

Il est à souligner, par ailleurs, que bien que l'adsorbant poreux de l'invention soit défini par sa capacité en oxygène, celui-ci peut être utilisé pour séparer d'autres mélanges gazeux que l'air ou les mélanges oxygène/azote, comme expliqué ci-après ; en d'autres termes, l'invention n'est nullement limitée à ces mélanges gazeux particulier.

Selon le cas, l'adsorbant selon l'invention peut aussi comprendre l'une ou plusieurs des caractéristiques suivantes :

- le diamètre de pore (Dm) est compris entre 1,2 nm et 10 nm, de préférence entre 1,4 nm et 5 nm.
- la capacité d'adsorption en oxygène de l'adsorbant, mesurée à +20°C et 1 bar, est comprise entre 0,1 et 8 Ncc/g, de préférence entre 0,5 et 7 Ncc/g, préférentiellement encore de 1 à 5 Ncc/g.
- il comporte une phase active adsorbante et au moins un liant inerte.
- la phase active adsorbante est choisie parmi les matériaux poreux cationiques, cristallins ou amorphes.
- le liant inerte est choisi parmi les argiles, les silices, les alumines et les alumino-silicates.
- le rapport de la proportion en poids de phase active adsorbante à la proportion en poids de liant inerte est de 95 : 5 à 5 : 95, de préférence de 50 : 50 à 90 : 10.
- la phase active adsorbante contient un ou plusieurs cations métalliques, de préférence des cations lithium, calcium, zinc, fer ou choisis parmi les Groupes I, II, VII, X, XI, XII et F du tableau périodique des éléments selon l'IUPAC, préférentiellement la phase zéolitique est échangée à au moins 80% par un ou plusieurs cations métalliques, de préférence à au moins 90%.

Par ailleurs, un tel adsorbant peut être utilisé pour adsorber au moins un composé gazeux contenu dans un mélange gazeux contenant plusieurs composés gazeux de polarité différente.

En outre, l'invention concerne aussi un procédé de séparation ou de purification d'un mélange gazeux contenant au moins un premier composé gazeux polaire et au moins un deuxième composé gazeux moins polaire que ledit premier composé gazeux polaire, dans lequel on adsorbe au moins ledit premier composé gazeux polaire présent dans ledit mélange gazeux sur un adsorbant selon l'invention.

Selon le cas, le procédé selon l'invention peut aussi comprendre l'une ou plusieurs des caractéristiques suivantes :

- le mélange gazeux à purifier ou à séparer est choisi parmi: les mélanges contenant de l'oxygène et de l'azote, en particulier l'air, les mélanges contenant du monoxyde de carbone et de l'hydrogène, et les hydrocarbures, notamment les oléfines.
- il est de type PSA ou VSA, et en ce que le mélange gazeux est de l'air, le premier composé gazeux polaire étant de l'azote et le deuxième composé gazeux moins polaire étant de l'oxygène.
- il est de type PSA et en ce que le mélange gazeux est un mélange contenant de l'hydrogène et/ou du CO et/ou du CO2, le premier composé gazeux polaire étant du CO2 et le deuxième composé gazeux moins polaire étant au moins de l'hydrogène.

- le mélange gazeux est à une température de -50°C à + 300°C, à une pression d'adsorption de 1 bar à 100 bars et/ou à une pression de désorption de 0,1 bar à 10 bars.

L'invention va être mieux comprise grâce aux explications données ci-après, à titre illustratif mais non limitatif, et en références aux figures annexées.

Les isothermes d'adsorption pour l'oxygène ont été mesurées à 20°C sur un appareil manométrique commercial MICROMERTICS ASAP 2405 pour diverses zéolithes naturelles, commerciales ou synthétisées au laboratoire.

Les matériaux utilisés et les résultats obtenus sont présentés dans le tableau suivant :

Tableau

| Structure de l'adsorbant | Composition de l'adsorbant | Diamètre de pore (A) | Capacité d'adsorption en oxygène à 1 bar |
|---|---|---|---|
| FER | $Si_{30}Al_6Na_2Mg_2O_{72}$ | 3.5 | 8.6 |
| CHA | $Si_{24}Al_{12}Ca_6O_{72}$ | 3.8 | 8.5 |
| MFI | $Si_{80}Al_{16}Na_{16}O_{192}$ | 5.3 | 6.4 |
| MOR | $Si_{40.4}Al_{7.6}Na_{0.9}Li_{7.1}O_{96}$ | 6.7 | 5.9 |
| MAZ | $Si_{16}Al_{10}Na_{10}O_{72}$ | 7.4 | 5.8 |
| ETS-10 | $Si_{37}Ti_{10.1}Na_{14.72}K_{4.7}O_{104}$ | 7.6 | 4.8 |
| KFI | $Si_{72}Al_{24}Cs_{5.8}Li_{18.2}O_{192}$ | 10 | 4.7 |
| FAU (Y) | $Si_{132}Al_{60}Na_{10.8}Li_{49.2}O_{72}$ | 12.4 | 2.5 |
| FAU (X) | $Si_{102.7}Al_{89.3}Li_{89.3}O_{72}$ | 12.4 | 3.0 |
| OTMA | Si | 18 | 1.5 |
| CTMA | Si | 32 | 1.3 |

Les résultats obtenus, à savoir les capacités d'adsorption pour l'oxygène, mesurées à 1 bar et 20°C, pour ces différents adsorbants zéolitiques sont présentés en fonction de la taille des pores desdits adsorbants sur la figure 2 ci-jointe.

Ces résultats obtenus montrent bien, de façon surprenante, une diminution constante de la capacité d'adsorption pour l'oxygène avec une augmentation du diamètre des pores et cela jusqu'à une valeur de 1,4 nm.

Au-delà de ce diamètre, la capacité d'adsorption pour l'oxygène n'évolue que très peu avec une augmentation du diamètre.

De là, l'invention est particulièrement adaptée à la séparation de mélange gazeux en vue de la production de molécules moins polaires par adsorption sélective de molécules plus polaires mettant en jeu des matériaux adsorbants à sélectivité améliorée présentant des ouvertures de pores supérieures à 1,4 nm.

## Revendications

**1.** Adsorbant poreux comportant des pores ayant un diamètre de pore (Dm) compris entre 1 nm et 14 nm, et ayant une capacité d'adsorption en oxygène, mesurée à +20°C et 1 bar, d'au plus 10 Ncc/g.

**2.** Adsorbant selon la revendication 1, caractérisé en ce que le diamètre de pore (Dm) est compris entre 1,2 nm et 10 nm, de préférence entre 1,4 nm et 5 nm.

**3.** Adsorbant selon l'une des revendications 1 ou 2, caractérisé en ce que la capacité d'adsorption en oxygène dudit adsorbant, mesurée à +20°C et 1 bar, est comprise entre 0.1 et 8 Ncc/g, de préférence entre 0.5 et 7 Ncc/g, préférentiellement encore de 1 à 5 Ncc/g.

**4.** Adsorbant selon l'une des revendications 1 à 3, caractérisé en ce qu'il comporte une phase active adsorbante et au moins un liant inerte.

**5.** Adsorbant selon l'une des revendications 1 à 4, caractérisé en ce que la phase active adsorbante est choisie parmi les matériaux poreux cationiques cristallins ou amorphes.

6. Adsorbant selon l'une des revendications 1 à 5, caractérisé en ce que le liant inerte est choisi parmi les argiles, les silices, les alumines et les alumino-silicates.

7. Adsorbant selon l'une des revendications 1 à 6, caractérisé en ce que le rapport de la proportion en poids de phase active adsorbante à la proportion en poids de liant inerte est de 95 : 5 à 5 : 95, de préférence de 50 : 50 à 90 : 10.

8. Adsorbant selon l'une des revendications 1 à 7, caractérisé en ce que la phase active adsorbante contient un ou plusieurs cations métalliques, de préférence des cations lithium, calcium, zinc, fer ou choisis parmi les Groupes I, II, VII, X, XI, XII et F du tableau périodique des éléments selon l'IUPAC, préférentiellement la phase zéolitique est échangée à au moins 80% par un ou plusieurs cations métalliques, de préférence à au moins 90%.

9. Utilisation d'un adsorbant selon l'une des revendications 1 à 8, pour adsorber au moins un composé gazeux contenu dans un mélange gazeux contenant plusieurs composés gazeux de polarité différente.

10. Procédé de séparation ou de purification d'un mélange gazeux contenant au moins un premier composé gazeux polaire et au moins un deuxième composé gazeux moins polaire que ledit premier composé gazeux polaire, dans lequel on adsorbe au moins ledit premier composé gazeux polaire présent dans ledit mélange gazeux sur un adsorbant selon l'une des revendications 1 à 8.

11. Procédé selon la revendication 10, dans lequel le mélange gazeux à purifier ou à séparer est choisi parmi:

    - les mélanges contenant de l'oxygène et de l'azote, en particulier l'air,
    - les mélanges contenant du monoxyde de carbone et de l'hydrogène, et - les hydrocarbures, notamment les oléfines.

12. Procédé selon l'une des revendications 10 ou 11, caractérisé en ce qu'il est de type PSA ou VSA, et en ce que le mélange gazeux est de l'air, le premier composé gazeux polaire étant de l'azote et le deuxième composé gazeux moins polaire étant de l'oxygène.

13. Procédé selon l'une des revendications 10 ou 11, caractérisé en ce qu'il est de type PSA et en ce que le mélange gazeux est un mélange contenant de l'hydrogène et/ou du CO et/ou du $CO_2$, le premier composé gazeux polaire étant du $CO_2$ et le deuxième composé gazeux moins polaire étant au moins de l'hydrogène.

FIG.1

FIG.2

**Office européen des brevets**

# RAPPORT DE RECHERCHE EUROPEENNE

Numéro de la demande

EP 00 40 1630

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 976 023 A (ESSO RESEARCH AND ENGINEERING COMPANY) <br> * page 2, ligne 41 - ligne 50 * <br> * page 3, ligne 68 - ligne 72 * | 1,2,5, 9-12 | B01J20/18 <br> B01D53/04 <br> B01D53/047 |
| A | GB 824 825 A (N.V. DE BATAAFSCHE PETROLEUM MAATSCHAPPIJ) <br> * page 3, ligne 116 - ligne 118 * | 1,2,5 | |
| A | US 5 559 070 A (TORII KAZUO ET AL) <br> 24 septembre 1996 (1996-09-24) <br> * colonne 5, ligne 53 - ligne 59 * <br> * colonne 6, ligne 44 * | 1,2,5,8 | |
| A | US 5 378 440 A (J.A. HERBST) <br> 3 janvier 1995 (1995-01-03) <br> * colonne 14, ligne 61 - colonne 15, ligne 31 * <br> * colonne 24, ligne 33 - ligne 45 * | 1,2,4-6 | |
| A | EP 0 893 156 A (BAYER AG) <br> 27 janvier 1999 (1999-01-27) <br> * page 2, ligne 3 - ligne 36; revendications 1-6 * | 1,4-12 | DOMAINES TECHNIQUES RECHERCHES (Int.Cl.7) <br><br> B01J <br> B01D |
| A | EP 0 685 258 A (TORAY INDUSTRIES) <br> 6 décembre 1995 (1995-12-06) <br> * revendications 1,6 * | 1,2 | |
| A | US 5 246 689 A (J.S. BECK) <br> 21 septembre 1993 (1993-09-21) <br> * colonne 1, ligne 16 - ligne 18 * <br> * colonne 25, ligne 65 - ligne 70 * | 1,2,5 | |
| A | EP 0 297 542 A (UNION CARBIDE CORPORATION) <br> 4 janvier 1989 (1989-01-04) <br> * page 3, ligne 1 - ligne 13 * <br> * page 4, ligne 7 - ligne 20 * | 1,4-12 | |

-/--

Le présent rapport a été établi pour toutes les revendications

| Lieu de la recherche | Date d'achèvement de la recherche | Examinateur |
|---|---|---|
| LA HAYE | 31 octobre 2000 | Hilgenga, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

**RAPPORT DE RECHERCHE EUROPEENNE**

Numéro de la demande

EP 00 40 1630

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 775 396 A (H. RASTELLI) 4 octobre 1988 (1988-10-04) * colonne 5, ligne 12 – ligne 29; revendications 1,3 * | 1,4, 6–11,13 | |
| A | US 3 140 933 A (D. W. MCKEE) | | |

|  |  |  | DOMAINES TECHNIQUES RECHERCHES (Int.Cl.7) |
|---|---|---|---|
|  |  |  |  |

Le présent rapport a été établi pour toutes les revendications

| Lieu de la recherche | Date d'achèvement de la recherche | Examinateur |
|---|---|---|
| LA HAYE | 31 octobre 2000 | Hilgenga, K |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou apres cette date
D : cité dans la demande
L : cité pour d'autres raisons
.......................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**  EP 00 40 1630

31-10-2000

| Document brevet cité au rapport de recherche | | Date de publication | Membre(s) de la famille de brevet(s) | | Date de publication |
|---|---|---|---|---|---|
| GB 976023 | A | | BE | 665815 A | 23-12-1965 |
| | | | DE | 1265144 B | |
| | | | NL | 136033 C | |
| | | | NL | 291467 A | |
| | | | US | 3237377 A | 01-03-1966 |
| GB 824825 | A | | AUCUN | | |
| US 5559070 | A | 24-09-1996 | JP | 6305724 A | 01-11-1994 |
| | | | JP | 8018812 B | 28-02-1996 |
| | | | JP | 8018812 A | 19-01-1996 |
| US 5378440 | A | 03-01-1995 | US | 5220101 A | 15-06-1993 |
| | | | US | 5098684 A | 24-03-1992 |
| | | | US | 5102643 A | 07-04-1992 |
| | | | US | 5057296 A | 15-10-1991 |
| | | | AU | 644136 B | 02-12-1993 |
| | | | AU | 7214891 A | 21-08-1991 |
| | | | CA | 2072352 A | 26-07-1991 |
| | | | CS | 9101669 A | 17-06-1992 |
| | | | DE | 69106121 D | 02-02-1995 |
| | | | DE | 69106121 T | 04-05-1995 |
| | | | DK | 512026 T | 20-03-1995 |
| | | | EP | 0512026 A | 11-11-1992 |
| | | | ES | 2072602 T | 16-07-1995 |
| | | | JP | 5503499 T | 10-06-1993 |
| | | | KR | 172612 B | 18-02-1999 |
| | | | MX | 168309 B | 17-05-1993 |
| | | | WO | 9111390 A | 08-08-1991 |
| | | | US | 5370785 A | 06-12-1994 |
| | | | US | 5145816 A | 08-09-1992 |
| | | | US | 5156829 A | 20-10-1992 |
| | | | US | 5104515 A | 14-04-1992 |
| | | | US | 5183561 A | 02-02-1993 |
| | | | US | 5837639 A | 17-11-1998 |
| | | | US | 5264203 A | 23-11-1993 |
| | | | US | 5238676 A | 24-08-1993 |
| | | | US | 5258114 A | 02-11-1993 |
| | | | US | 5246689 A | 21-09-1993 |
| | | | US | 5211934 A | 18-05-1993 |
| | | | US | 5215737 A | 01-06-1993 |
| | | | US | 5196633 A | 23-03-1993 |
| | | | US | 5200058 A | 06-04-1993 |
| | | | US | 5304363 A | 19-04-1994 |
| | | | US | 5250282 A | 05-10-1993 |
| | | | US | 5334368 A | 02-08-1994 |

EPO FORM P0460

## EP 1 070 539 A1

**ANNEXE AU RAPPORT DE RECHERCHE EUROPEENNE
RELATIF A LA DEMANDE DE BREVET EUROPEEN NO.**

EP 00 40 1630

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-10-2000

| Document brevet cité au rapport de recherche | | Date de publication | Membre(s) de la famille de brevet(s) | | | Date de publication |
|---|---|---|---|---|---|---|
| US 5378440 | A | | ZA | 9104162 | A | 24-02-1993 |
| | | | US | 5108725 | A | 28-04-1992 |
| | | | US | 5110572 | A | 05-05-1992 |
| | | | US | 5112589 | A | 12-05-1992 |
| | | | US | 5198203 | A | 30-03-1993 |
| | | | US | 5174888 | A | 29-12-1992 |
| | | | US | 5300277 | A | 05-04-1994 |
| | | | CN | 1062308 | A,B | 01-07-1992 |
| | | | CN | 1136977 | A | 04-12-1996 |
| EP 893156 | A | 27-01-1999 | DE | 19731574 | A | 28-01-1999 |
| | | | BR | 9802546 | A | 09-05-2000 |
| | | | CN | 1214960 | A | 28-04-1999 |
| | | | JP | 11130425 | A | 18-05-1999 |
| EP 685258 | A | 06-12-1995 | CA | 2156516 | A | 29-06-1995 |
| | | | WO | 9517246 | A | 29-06-1995 |
| US 5246689 | A | 21-09-1993 | US | 5102643 | A | 07-04-1992 |
| | | | US | 5098684 | A | 24-03-1992 |
| | | | AU | 644136 | B | 02-12-1993 |
| | | | AU | 7214891 | A | 21-08-1991 |
| | | | CA | 2072352 | A | 26-07-1991 |
| | | | DE | 69106121 | D | 02-02-1995 |
| | | | DE | 69106121 | T | 04-05-1995 |
| | | | DK | 512026 | T | 20-03-1995 |
| | | | EP | 0512026 | A | 11-11-1992 |
| | | | ES | 2072602 | T | 16-07-1995 |
| | | | JP | 5503499 | T | 10-06-1993 |
| | | | KR | 172612 | B | 18-02-1999 |
| | | | US | 5378440 | A | 03-01-1995 |
| | | | WO | 9111390 | A | 08-08-1991 |
| | | | US | 5370785 | A | 06-12-1994 |
| | | | US | 5108725 | A | 28-04-1992 |
| | | | US | 5156829 | A | 20-10-1992 |
| | | | US | 5110572 | A | 05-05-1992 |
| | | | US | 5104515 | A | 14-04-1992 |
| | | | US | 5112589 | A | 12-05-1992 |
| | | | US | 5198203 | A | 30-03-1993 |
| | | | US | 5183561 | A | 02-02-1993 |
| | | | US | 5837639 | A | 17-11-1998 |
| | | | US | 5264203 | A | 23-11-1993 |
| | | | US | 5238676 | A | 24-08-1993 |
| | | | US | 5258114 | A | 02-11-1993 |
| | | | US | 5174888 | A | 29-12-1992 |
| | | | US | 5211934 | A | 18-05-1993 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**          EP 00 40 1630

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

31-10-2000

| Document brevet cité au rapport de recherche | Date de publication | Membre(s) de la famille de brevet(s) | Date de publication |
|---|---|---|---|
| US 5246689 A | | US 5215737 A | 01-06-1993 |
| | | US 5196633 A | 23-03-1993 |
| | | US 5200058 A | 06-04-1993 |
| | | US 5304363 A | 19-04-1994 |
| | | US 5220101 A | 15-06-1993 |
| | | US 5300277 A | 05-04-1994 |
| | | US 5250282 A | 05-10-1993 |
| | | US 5334368 A | 02-08-1994 |
| | | CS 9101669 A | 17-06-1992 |
| | | MX 168309 B | 17-05-1993 |
| | | US 5145816 A | 08-09-1992 |
| | | ZA 9104162 A | 24-02-1993 |
| EP 297542 A | 04-01-1989 | US 4859217 A | 22-08-1989 |
| | | AT 84436 T | 15-01-1993 |
| | | AU 608018 B | 21-03-1991 |
| | | AU 1854588 A | 05-01-1989 |
| | | BR 8803207 A | 17-01-1989 |
| | | CA 1312830 A | 19-01-1993 |
| | | CN 1030534 A,B | 25-01-1989 |
| | | DE 3877436 A | 25-02-1993 |
| | | DE 3877436 T | 19-05-1993 |
| | | ES 2037142 T | 16-06-1993 |
| | | FI 883102 A,B, | 31-12-1988 |
| | | IL 86918 A | 29-03-1992 |
| | | IN 171668 A | 05-12-1992 |
| | | JP 1056112 A | 03-03-1989 |
| | | JP 1814862 C | 18-01-1994 |
| | | JP 5025527 B | 13-04-1993 |
| | | KR 9300531 B | 25-01-1993 |
| | | MX 165432 B | 11-11-1992 |
| | | ZA 8804658 A | 29-03-1989 |
| US 4775396 A | 04-10-1988 | AT 71553 T | 15-02-1992 |
| | | AU 2465388 A | 11-05-1989 |
| | | BR 8805757 A | 25-07-1989 |
| | | CA 1312829 A | 19-01-1993 |
| | | CN 1036338 A,B | 18-10-1989 |
| | | DE 3867806 A | 27-02-1992 |
| | | EG 18731 A | 28-02-1994 |
| | | EP 0316665 A | 24-05-1989 |
| | | GR 3004057 T | 31-03-1993 |
| | | IN 172068 A | 27-03-1993 |
| | | JP 1160816 A | 23-06-1989 |
| | | JP 1956933 C | 10-08-1995 |
| | | JP 6088768 B | 09-11-1994 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**

EP 00 40 1630

La présente annexe indique les membres de la famille de brevets relatifs aux documents brevets cités dans le rapport de
recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

31-10-2000

| Document brevet cité<br>au rapport de recherche | Date de<br>publication | Membre(s) de la<br>famille de brevet(s) | Date de<br>publication |
|---|---|---|---|
| US 4775396    A | | KR    9306400 B<br>NO      884927 A,B,<br>NZ      226842 A<br>ZA     8808292 A | 14-07-1993<br>08-05-1989<br>27-03-1990<br>26-07-1989 |
| US 3140933    A | | AUCUN | |

Pour tout renseignement concernant cette annexe : voir Journal Officiel de l'Office européen des brevets, No.12/82